# FASCICULE DE BREVET EUROPEEN

(11) **EP 1 625 025 B1**
(45) Date de publication et mention de la délivrance du brevet: **09.06.2010**
(21) Numéro de dépôt: 04742487.4
(22) Date de dépôt: 13.04.2004
(51) Int. Cl.: B60B 3/02, B60B 25/10, B60B 25/12

(54) **PROCEDE DE FABRICATION D'UNE ROUE MONOBLOC EN ALLIAGE LEGER POUR VEHICULE AUTOMOBILE**
VERFAHREN ZUR HERSTELLUNG EINTEILIGER LEICHTMETALLRÄDER FÜR KRAFTFAHRZEUGE
METHOD FOR THE PRODUCTION OF A LIGHT-ALLOY SINGLE-PIECE WHEEL FOR A MOTOR VEHICLE

(30) Priorité: 21.05.2003 FR 0306090
(43) Date de publication de la demande: 15.02.2006
(73) Titulaire: MONTUPET S.A., F-92110 Clichy (FR)
(72) Inventeur: RABUSSIER, Boris, F-17800 Pons (FR); MEYER, Philippe, F-60600 Ronquerolles (FR); CALLAIS, Thierry, F-60600 Breuil Le Vert (FR); GIRAUD, Daniel, F-36400 La Chatre (FR); PIELIN, Jean-Pierre, F-60410 Verberie (FR); SARRAZIN, Michel, F-36120 Etrechet (FR)
(74) Mandataire: Le Forestier, Eric
(86) Numéro de dépôt international: PCT/FR2004/000904
(87) Numéro de publication internationale: WO 2004/103731

(56) Documents cités:
- EP-A- 1 112 867
- WO-A-98/47722
- US-A- 5 651 590

## Description

La présente invention concerne d'une façon générale les roues de véhicules automobiles réalisées par moulage d'alliage léger tel qu'un alliage à base d'aluminium. Une telle roue selon le préambule de la revendication 1 est connue du document WO 98/47722 A.

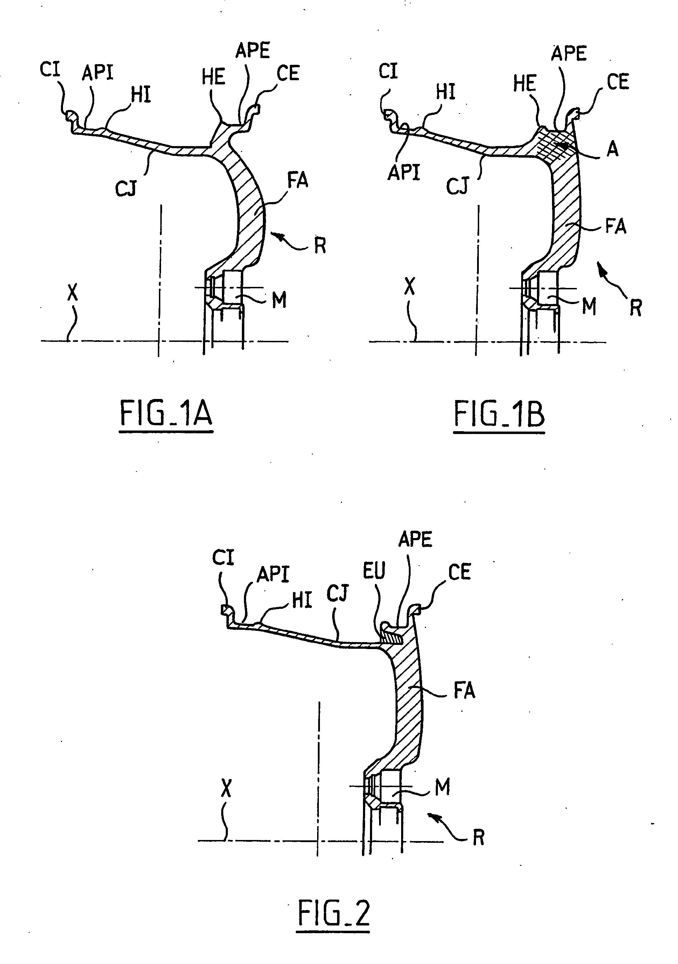

La figure 1A des dessins annexés montre en demi-coupe une roue R moulée en alliage léger conventionnelle (X étant l'axe de rotation de la roue), comportant une face avant FA pourvue en son centre d'un moyeu M et de trous de fixation, une partie périphérique de creux de jante CJ, un crochet intérieur CI et un bourrelet anti-déjantage (« hump » en terminologie anglo-saxonne) intérieur HI délimitant entre eux un appui intérieur API pour le pneumatique, et du côté opposé (côté face avant) un crochet extérieur CE et un bourrelet anti-déjantage extérieur HE délimitant entre eux un appui extérieur APE pour le pneumatique.

Il existe de nos jours une tendance à réaliser de telles roues avec un style dit « full face » en terminologie anglo-saxonne, de telles roues étant caractérisées par une face avant FA de style qui est peu décalée, voire pratiquement en tangence avec le crochet de roue extérieur CE. La figure 1B est une demi-coupe d'une telle roue « full face ». On a représenté sur cette même figure une zone A relativement massive qui présente l'inconvénient d'alourdir la roue.

On a déjà tenté de résoudre ce problème de poids, ainsi que de la présence de cette zone A massive où la solidification est délicate et peut être le siège de microretassures, en réalisant la roue en deux parties. Mais on perd alors les avantages, en termes notamment de coût et de cadence, de la réalisation d'une pièce entièrement monobloc.

La présente invention vise à pallier ces limitations de l'état de la technique.

Elle propose à cet effet un procédé de fabrication d'une roue monobloc en alliage léger pour véhicule automobile, comprenant la réalisation par moulage d'une pièce comprenant une face avant, une partie périphérique de creux de jante et des aménagements pour l'appui et la retenue d'un pneumatique, procédé **caractérisé en ce qu**'il comprend la réalisation a posteriori par usinage, au-dessous d'un appui de pneumatique'côté face avant, d'au moins une cavité d'allègement.

Certains aspects préférés, mais non limitatifs, du procédé selon l'invention sont les suivante
* l'usinage consiste en une série de perçages.
* les perçages sont réalisés à des profondeurs différentes.
* les perçages sont réalisés à au moins deux profondeurs différentes, l'une pour des régions correspondant à des bras de la face avant, l'autre correspondant à des zones de la face avant situées entre deux bras.
* le diamètre et la profondeur des perçages sont choisis de façon à laisser, au voisinage desdits perçages, des épaisseurs de pardi comprises entre 1 et 6 mm, de préférence entre 2 et 5 mm.
* le procédé comprend une étape d'ajustement de la profondeur de certains des perçages de manière à réaliser un équilibrage de la roue.
* l'étape d'ajustement de profondeur est mise en oeuvre sur trois perçages au moins.
* l'étape d'ajustement de profondeur est mise en oeuvre après une étape de perçage principale suivie d'une étape de mesure dynamique du balourd de la roue.
* l'étape d'ajustement de profondeur est réalisée au cours d'une étape de perçage principale, réalisée postérieurement à une mesure dynamique du balourd de la roue.
* l'usinage consiste en un tournage.
* le procédé comprend une étape préalable de détermination d'un décalage entre l'axe d'un tour sur lequel est réalisé le tournage et l'axe de la roue, de manière à réaliser par le tournage un équilibrage de la roue.
* le décalage comprend une légère inclinaison entre les axes.
* le décalage comprend une légère excentration entre les axes.
* le procédé comprend en outre la réalisation, dans la région du fond de la cavité tournée, d'un trou taraudé pour une valve du type vissé.
* l'usinage consiste en un fraisage.
* l'usinage est réalisé à une profondeur variable.
* le procédé comprend une étape préalable de calcul de paramètres de fraisage de manière à réaliser au cours du fraisage un équilibrage de la roue.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels outre les figures 1A et 1B déjà décrites :
La figure 2 illustre schématiquement le principe d'un allègement par enlèvement de matière selon la présente invention ;
Les figures 3A et 3B illustrent schématiquement, par deux demi-vues en coupe radiale dans des plans différents, une première forme de réalisation de l'invention,
La figure 4 illustre en perspective une partie de la roue des figures 3A et 3B,
Les figures 5, 6A et 6B illustrent l'agencement sur la roue de certains types de trous d'allègement, et
Les figures 7A et 7B illustrent schématiquement, par deux vues partielles en coupe radiale, une deuxième forme de réalisation de l'invention.

Sur ces figures, des éléments ou parties identiques ou similaires à ceux des figures 1A et 1B sont désignés dans la mesure du possible par les mêmes signes de référence, et ne seront pas décrits à nouveau.

En référence tout d'abord à la figure 2, on a illustré le principe général de la présente invention, selon lequel on usine des évidements EU sous l'appui extérieur de pneumatique APE en vue d'alléger la roue sans compromettre ses propriétés mécaniques.

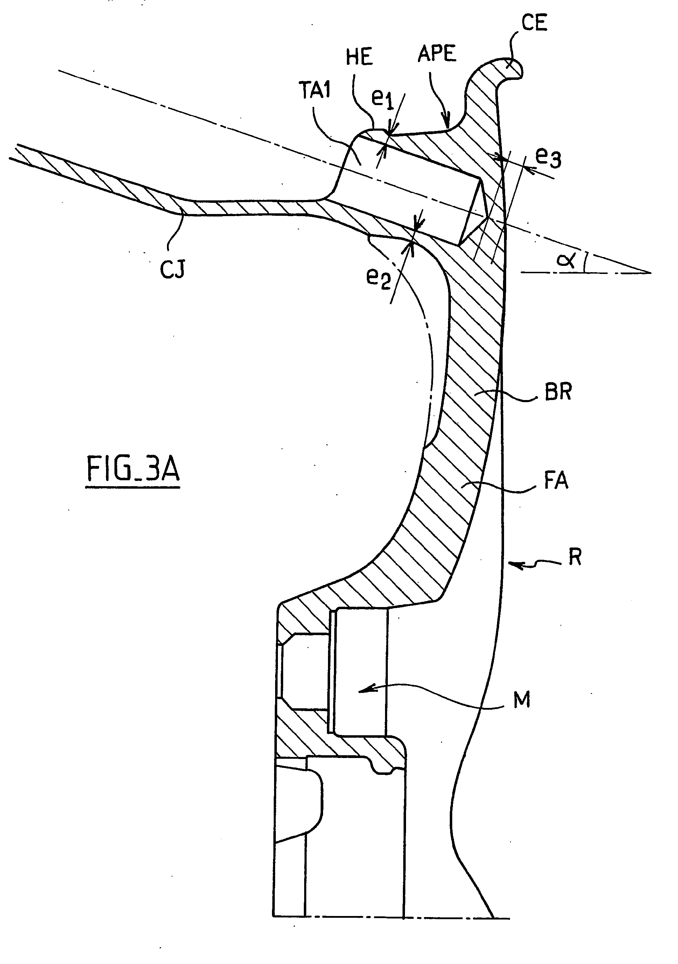

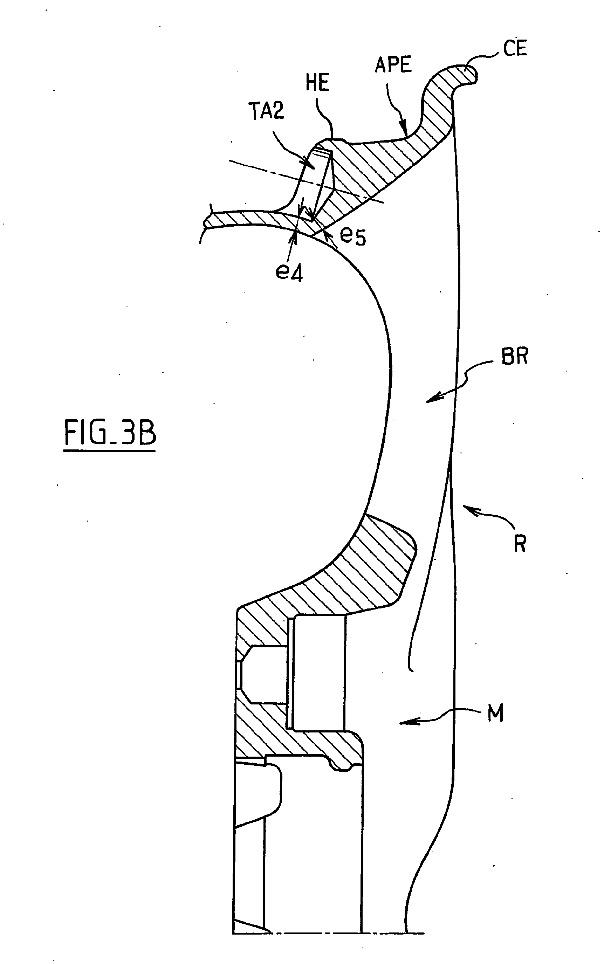

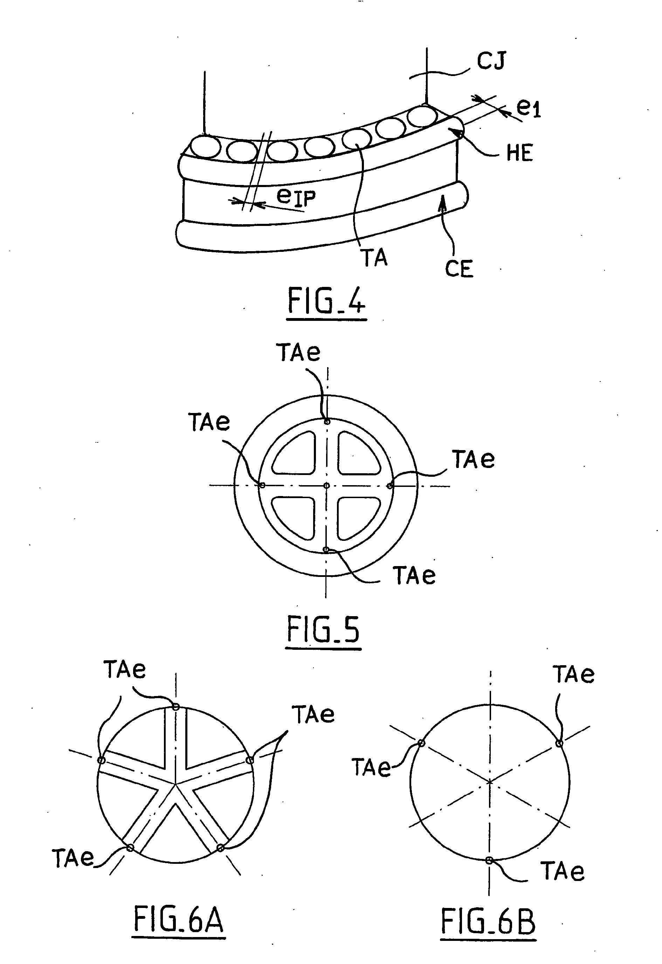

Dans une première forme de réalisation, et en référence aux figures 3A, 3B et 4, ces évidements sont constitués par des trous d'allègement TA réalisés par perçage. Ces perçages sont réalisés à différentes profondeurs de façon à maximiser l'allègement par rapport à la masse à évider, ainsi que cela est représenté dans les figures 3A et 3B, sans compromettre la résistance mécanique. A cet égard, chaque perçage est réalisé en laissant des épaisseurs résiduelles e2 à e5 appropriées, de l'ordre de quelques millimètres et de préférence voisines de 2 à 3 mm (le cas de l'épaisseur e1 étant abordé plus loin).

Ainsi l'on a représenté sur la figure 3A le cas d'un perçage TA1 réalisé au niveau d'un bras de roue et qui peut donc être profond, la profondeur étant déterminée par l'épaisseur admissible e3 de la zone de la roue en fond de perçage. La figure 3B illustre un perçage moins profond TA2 réalisé dans la zone de la roue située entre deux bras, la cote minimale e5 déterminant la profondeur de ce perçage.

Les perçages TA ont un diamètre rendant l'évidement maximal. Plus précisément, et en référence à la figure 4, le diamètre des perçages est tel qu'il tangente à peu près la surface externe des creux de jante CJ et que sur la génératrice diamétralement opposée, ils laissent une épaisseurs e1 (voir également figure 3A) de l'ordre de 2 à à 6 mm, de préférence 3 à 5 mm.

L'espacement entre les trous percés TA est de préférence minimisé jusqu'à une épaisseur interperçages eIP de 1 à 4 mm, et de préférence de 2 à 3 mm.

Enfin l'inclinaison α des axes des trous (qui peut être la même pour tous les trous ou varier) est déterminée en fonction de la géométrie de la roue et d'éventuelles contraintes apportées par l'équipement de perçage. Cette inclinaison varie entre 0 et 40° par rapport à l'axe de la roue.

Selon une variante avantageuse de cette forme de réalisation, le fait que la profondeur des trous puisse être variée est exploité pour réaliser à l'occasion de cette opération d'allégement, l'équilibrage de la roue. Plus précisément, la roue est de préférence d'abord usinée sur l'ensemble des surfaces et percée pour la majorité des trous d'allègement TA aux cotes finales.

Un certain nombre de trous, dits trous d'équilibrage TAe, restent toutefois percés à une certaine distance, typiquement quelques millimètres, de la cote finale d'épaisseur résiduelle e3 ou e5. Dans le cas d'une roue à quatre bras (voir schéma en figure 5), on prévoit quatre trous d'équilibrage TAe dans les régions des extrémités des bras. Plus généralement, on place de préférence les trous d'équilibrage soit dans les régions des extrémités des bras, ou d'une partie seulement des bras(la figure 6A illustrant une configuration d'un nombre de bras impair), soit selon un système symétrique d'axes se croisant au niveau de l'axe central de la roue (voir figure 6B), en corrélation ou non avec l'agencement des bras, les trous d'équilibrage TAe devant se trouver de préférence à peu près répartis à la périphérie de la roue.

Dans tous les cas, on prévoit au minimum trois trous d'équilibrage TAe.

Concrètement, après mesure dynamique du balourd de la roue, on détermine par un calculateur appropriée la profondeur de consigne des trous d'équilibrage propre à annuler, ou au moins à réduire sensiblement, ce balourd. Naturellement, la marge laissée pour cette opération est suffisante pour ne pas tomber en deçà des épaisseurs résiduelles souhaitables e3 (ou e5 le cas échéant).

Selon une variante de cet aspect de l'invention, on peut effectuer une mesure du balourd avant de commencer le perçage des trous d'allègement, et effectuer le perçage des trous d'allègement TA en ajustant la profondeur de certains trous TAe réalisant l'équilibrage. On simplifie ainsi le processus de fabrication. Cette variante implique bien entendu que les perçages soient réalisés avec la symétrie appropriée pour ne pas rajouter du balourd.

Enfin, selon une forme de réalisation préférée, les perçages sont omis à l'endroit de la roue où est formé le trou de valve.

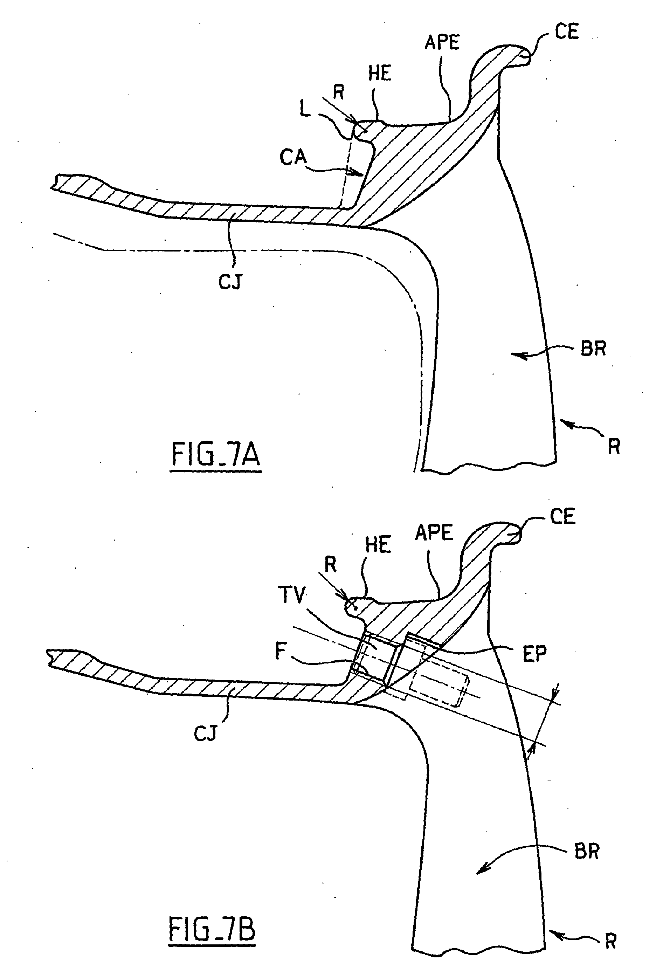

En référence maintenant aux figures 7A et 7B, on va décrire une autre forme de réalisation de l'invention où l'allègement de la roue au-dessous de l'appui de pneumatique extérieur est réalisé par tournage.

Ainsi la figure 7A illustre une cavité d'allègement CA formée par tournage, le matériau de la roue dans cette zone avant tournage étant délimité par la ligne L. La profondeur de la cavité tournée est déterminée en fonction de la géométrie de la roue sur l'ensemble de sa périphérie, et principalement par ses zones situées entre les bras, où le degré de creusement est nécessairement plus limité.

On notera ici, en référence à la figure 7B, que du fait de la perte d'épaisseur de la roue liée à la cavité tournée sur l'ensemble de sa périphérie, y compris à l'endroit où doit se situer la valve, on utilise de préférence une valve de type vissé. A cet effet, on forme dans la roue un trou de valve TV avec un passage standard doté d'un filetage F, délimité du côté extérieur de la roue par un épaulement EP.

On notera également que la cavité d'allègement est, dans cette forme de réalisation, tournée de façon à préserver un rayon de courbure R suffisamment élevé pour ne pas faire obstacle à la montabilité du pneumatique sur la roue.

On comprend que cette forme de réalisation n'autorise pas un équilibrage de la roue comme dans la forme de réalisation précédente car la profondeur du creusement n'est pas ajustable. Toutefois, on peut ici réaliser un équilibrage de la roue, par rapport à un balourd mesuré dynamiquement, en calculant un léger décalage entre l'axe du tour sur lequel est réalisé le tournage et l'axe de la roue, et en effectuant le tournage avec ce décalage. Concrètement, ce décalage peut être une légère inclinaison entre les deux axes, et/ou une légère excentration entre les deux axes.

Selon une autre forme de réalisation de l'invention, non illustrée, on réalise l'allègement en-dessous de l'appui de pneumatique extérieur par fraisage. Cette troisième forme de réalisation permet à nouveau, en travaillant à profondeur variable, de maximiser l'allègement sans compromettre les propriétés mécaniques de la roue. Elle permet également de réaliser, soit lors des passes de fraisage principales, soit lors d'une passe spécifique, de réaliser un équilibrage de la roue.

Bien entendu, la présente invention n'est nullement limitée aux formes de réalisation décrites et représentées, mais l'homme du métier saura y apporter de nombreuses variantes et modifications.

### Exemple

On a réalisé une roue pour véhicule léger d'un diamètre standard de 16 pouces, à tendance « full face », conforme aux spécifications de l'ETRTO . La roue était réalisée en un alliage normalisé AS7G.

Un allègement par perçages a permis de réaliser un allègement de la roue de 650 grammes, tandis qu'un allègement par tournage a permis de réduire le poids de 400 grammes.

Dans la pratique, les allègements obtenus dépendent de la forme de la roue dans la région de l'appui de pneumatique extérieur, du diamètre de la roue, de la géométrie de la face avant, de divers facteurs d'optimisation, etc.

## Revendications

1. Procédé de fabrication d'une roue monobloc en alliage léger pour véhicule automobile, comprenant la réalisation par moulage d'une pièce comprenant une face avant, une partie périphérique de creux de jante et des aménagements pour l'appui et la retenue d'un pneumatique, procédé **caractérisé en ce qu'**il comprend la réalisation a posteriori par usinage, au-dessous d'un appui de pneumatique côté face avant, d'au moins une cavité d'allègement.

2. Procédé selon la revendication 1, **caractérisé en ce que** l'usinage consiste en une série de perçages.

3. Procédé selon la revendication 2, **caractérisé en ce que** les perçages sont réalisés à des profondeurs différentes.

4. Procédé selon l'une des revendications 1 à 3, **caractérisé en ce que** les perçages sont réalisés à au moins deux profondeurs différentes, l'une pour des régions correspondant à des bras de la face avant, l'autre correspondant à des zones de la face avant situées entre deux bras.

5. Procédé selon la revendication 3 ou 4, **caractérisé en ce que** le diamètre et la profondeur des perçages sont choisis de façon à laisser, au voisinage desdits perçages, des épaisseurs de paroi comprises entre 1 et 6 mm, de préférence entre 2 et 5 mm.

6. Procédé selon l'une des revendications 1 à 5, **caractérisé en ce qu'**il comprend une étape d'ajustement de la profondeur de certains des perçages de manière à réaliser un équilibrage de la roue.

7. Procédé selon la revendication 6, **caractérisé en ce que** l'étape d'ajustement de profondeur est mise en oeuvre sur trois perçages au moins.

8. Procédé selon l'une des revendications 6 et 7, **caractérisé en que** l'étape d'ajustement de profondeur est mise en oeuvre après une étape de perçage principale suivie d'une étape de mesure dynamique du balourd de la roue.

9. Procédé selon l'une des revendications 6 et 7, **caractérisé en ce que** l'étape d'ajustement de profondeur est réalisée au cours d'une étape de perçage principale, réalisée postérieurement à une mesure dynamique du balourd de, la roue.

10. Procédé selon la revendication 1, **caractérisé en ce que** l'usinage consiste en un tournage.

11. Procédé selon la revendication 10, **caractérisé en ce qu'**il comprend une étape préalable de détermination d'un décalage entre l'axe d'un tour sur lequel est réalisé le tournage et l'axe de la roue, de manière à réaliser par le tournage un équilibrage de la roue.

12. Procédé selon la revendication 11, **caractérisé en ce que** le décalage comprend une légère inclinaison entre les axes.

13. Procédé selon l'une des revendications 11 et 12, **caractérisé en ce que** le décalage comprend une légère excentration entre les axes.

14. Procédé selon l'une des revendications 10 à 13, **caractérisé en ce qu'**il comprend en outre la réalisation, dans la région du fond de la cavité tournée, d'un trou taraudé pour une valve du type vissé.

15. Procédé selon la revendication 1, **caractérisé en ce que** l'usinage consiste en un fraisage.

16. Procédé selon la revendication 15, **caractérisé en ce que** l'usinage est réalisé à une profondeur variable.

17. Procédé selon la revendication 16, **caractérisé en ce qu'**il comprend une étape préalable de calcul de paramètres de fraisage de manière à réaliser au cours du fraisage un équilibrage de la roue.

## Claims

1. A method of manufacturing a one-piece wheel of light alloy for a motor vehicle, the method comprising molding a part having a front face, a drop-rim peripheral portion, and arrangements for supporting and retaining a tire, and being **characterized in that** it includes an a posteriori machining step of making at least one weight-reducing cavity beneath a tire seat beside the front face.

2. A method according to claim 1, **characterized in that** the machining step consists in drilling a series of holes.

3. A method according to claim 2, **characterized in that** the holes are drilled to different depths.

4. A method according to any one of claims 1 to 3, **characterized in that** the holes are made to at least two different depths, one for regions corresponding to spokes of the front face, the other corresponding to zones of the front face situated between two spokes.

5. A method according to claim 3 or claim 4, **characterized in that** the diameter and the depth of the holes are selected so as to leave wall thicknesses in the vicinity of said holes lying in the range 1 mm to 6 mm, and preferably in the range 2 mm to 5 mm.

6. A method according to any one of claims 1 to 5, **characterized in that** it includes a step of adjusting the depth of some of the holes so as to balance the wheel.

7. A method according to claim 6, **characterized in that** the depth adjustment step is implemented on at least three holes.

8. A method according to either one of claims 6 and 7, **characterized in that** the depth adjustment step is implemented after a main drilling step followed by a step of dynamically measuring the unbalance of the wheel.

9. A method according to either one of claims 6 and 7, **characterized in that** the depth adjustment step is performed during a main drilling step performed after dynamically measuring the unbalance of the wheel.

10. A method according to claim 1, **characterized in that** the machining consists in turning.

11. A method according to claim 10, **characterized in that** it includes a prior step of determining an offset between the axis of a lathe on which the turning is performed and the axis of the wheel, so as to balance the wheel by performing the turning.

12. A method according to claim 11, **characterized in that** the offset comprises a small inclination between the axes.

13. A method according to either one of claims 11 and 12, **characterized in that** the offset comprises a small amount of eccentricity between the axes.

14. A method according to any one of claims 10 to 13, **characterized in that** it further includes making a tapped hole for a screw type valve in the region of the bottom of the turned cavity.

15. A method according to claim 1, **characterized in that** the machining consists in milling.

16. A method according to claim 15, **characterized in that** the machining is performed at a varying depth.

17. A method according to claim 16, **characterized in that** it includes a prior step of calculating milling parameters so as to balance the wheel during the milling step.

## Patentansprüche

1. Verfahren zum Herstellen eines einteiligen Rads aus Leichtmetall-Legierung für Kraftfahrzeuge, umfassend das Ausführen durch Formen eines Werkstücks, das eine Vorderseite, einen Felgenmulden-Umfangsteil und Einrichtungen für die Abstützung und die Halterung eines Luftreifens umfasst, wobei das Verfahren **dadurch gekennzeichnet, dass** es die nachträgliche Ausführung durch Weiterverarbeitung, oberhalb einer Luftreifenabstützung auf der Vorderseite, mindestens eines Entlastungshohlraums umfasst.

2. Verfahren nach Anspruch 1, **dadurch gekennzeichnet, dass** die Weiterverarbeitung aus einer Reihe von Bohrungen besteht.

3. Verfahren nach Anspruch 2, **dadurch gekennzeichnet, dass** die Bohrungen auf verschiedenen Tiefen ausgeführt werden.

4. Verfahren nach einem der Ansprüche 1 bis 3, **dadurch gekennzeichnet, dass** die Bohrungen auf mindestens zwei verschiedenen Tiefen ausgeführt werden, nämlich die eine für Bereiche, die Armen der Vorderseite entsprechen, wobei die andere Tiefe Zonen der Vorderseite entspricht, die sich zwischen zwei Armen befinden.

5. Verfahren nach Anspruch 3 oder 4, **dadurch gekennzeichnet, dass** der Durchmesser und die Tiefe der Bohrungen gewählt werden, um in der Nähe der Bohrungen Wanddicken zwischen 1 und 6 mm, bevorzugt zwischen 2 und 5 mm, übrigzulassen.

6. Verfahren nach einem der Ansprüche 1 bis 5, **dadurch gekennzeichnet, dass** es einen Schritt zum Anpassen der Tiefe bestimmter Bohrungen umfasst, um ein Auswuchten des Rads auszuführen.

7. Verfahren nach Anspruch 6, **dadurch gekennzeichnet, dass** der Schritt des Anpassens der Tiefe ab mindestens drei Bohrungen durchgeführt wird.

8. Verfahren nach einem der Ansprüche 6 und 7, **dadurch gekennzeichnet, dass** der Schritt des Anpassens der Tiefe nach einem Hauptbohrungsschritt durchgeführt wird, auf den ein Schritt zum dynamischen Messen der Unwucht des Rads folgt.

9. Verfahren nach einem der Ansprüche 6 und 7, **dadurch gekennzeichnet, dass** der Schritt des Anpassens der Tiefe im Laufe eines Hauptbohrungsschritts ausgeführt wird, der nachträglich zu einer dynamischen Messung der Unwucht des Rads ausgeführt wird.

10. Verfahren nach Anspruch 1, **dadurch gekennzeichnet, dass** die Weiterverarbeitung aus einer Dreharbeit besteht.

11. Verfahren nach Anspruch 10, **dadurch gekennzeichnet, dass** es einen vorhergehenden Schritt zum Bestimmen einer Verlagerung zwischen der Achse einer Drehbank, auf der die Dreharbeit durchgeführt wird, und der Achse des Rads umfasst, so dass durch die Dreharbeit ein Auswuchten des Rads ausgeführt wird.

12. Verfahren nach Anspruch 11, **dadurch gekennzeichnet, dass** die Verlagerung eine leichte Neigung zwischen den Achsen umfasst.

13. Verfahren nach einem der Ansprüche 11 und 12, **dadurch gekennzeichnet, dass** die Verlagerung eine leichte Außermittigkeit zwischen den Achsen umfasst.

14. Verfahren nach einem der Ansprüche 10 bis 13, **dadurch gekennzeichnet, dass** es ferner die Ausführung, in dem Bereich des Bodens des gedrehten Hohlraums, eines Lochs mit Innengewinde für ein Schraubventil umfasst.

15. Verfahren nach Anspruch 1, **dadurch gekennzeichnet, dass** die Weiterverarbeitung aus einer Fräsarbeit besteht.

16. Verfahren nach Anspruch 15, **dadurch gekennzeichnet, dass** die Weiterverarbeitung auf einer variablen Tiefe ausgeführt wird.

17. Verfahren nach Anspruch 16, **dadurch gekennzeichnet, dass** es einen vorhergehenden Schritt des Berechnens von Fräsparametern umfasst, um im Laufe der Fräsarbeit ein Auswuchten des Rads auszuführen.
